# EUROPEAN PATENT SPECIFICATION

(11) **EP 3 703 079 B1**
(45) Date of publication and mention of the grant of the patent: **09.03.2022**
(21) Application number: 18871564.3
(22) Date of filing: 26.10.2018
(51) Int. Cl.: H01B 1/04, C01B 32/168, D02G 3/16, D02G 3/26, H01B 5/08, H01B 7/00, D02G 3/28, H01B 5/10

(54) **CARBON NANOTUBE COMPOSITE WIRE, CARBON NANOTUBE-COATED ELECTRIC WIRE, AND WIRE HARNESS, ROBOT WIRING, AND OVERHEAD LINE**
KOHLENSTOFFNANORÖHRCHENVERBUNDDRAHT, MIT KOHLENSTOFFNANORÖHRCHEN BESCHICHTETER STROMDRAHT UND KABELBAUM, ROBOTERVERDRAHTUNG UND FREILEITUNG
FIL COMPOSITE DE NANOTUBES DE CARBONE, FIL ÉLECTRIQUE REVÊTU DE NANOTUBES DE CARBONE, ET FAISCEAU ÉLECTRIQUE, CÂBLAGE DE ROBOT ET LIGNE AÉRIENNE

(30) Priority: 26.10.2017 JP 2017207667
(43) Date of publication of application: 02.09.2020
(73) Proprietor: Furukawa Electric Co., Ltd., Chiyoda-ku Tokyo 100-8322 (JP)
(72) Inventor: YAMAZAKI, Satoshi, Tokyo 100-8322 (JP); YAMASHITA, Satoshi, Tokyo 100-8322 (JP); HATAMOTO, Kenji, Tokyo 100-8322 (JP); AIZAWA, Hideki, Tokyo 100-8322 (JP)
(74) Representative: Gunzelmann, Rainer
(86) International application number: PCT/JP2018/039979
(87) International publication number: WO 2019/083037

(56) References cited:
- WO-A1-2015/083701
- WO-A1-2017/164249
- JP-A- H07 192 560
- JP-A- 2008 523 254
- JP-A- 2013 047 402
- JP-A- 2014 517 797
- JP-A- 2017 106 129
- JP-A- 2017 171 545
- US-A1- 2008 136 551
- US-A1- 2015 310 957

## Description

### Technical Field

The present invention relates to a carbon nanotube strand wire in which a plurality of carbon nanotube wires configured of a plurality of carbon nanotubes are twisted together, a coated carbon nanotube electric wire in which the carbon nanotube strand wire is coated with an insulating material, a wire harness which has the coated electric wire, a wiring for a robot, and an overhead wiring for a train.

### Background Art

Carbon nanotubes (hereinafter, also referred to "CNTs") are materials that have various characteristics and have been expected to be applied to a large number of fields.

For example, the CNTs are three-dimensional mesh structure bodies configured of a single layer of a tubular body that has a mesh structure of hexagonal lattices or multiple layers disposed substantially coaxially, have a light weight, and have various excellent characteristics such as electroconductivity, heat conductivity, and mechanical strength. However, it is not easy to form the CNTs into wires, and no technologies using the CNTs as wires have been proposed.

As one of a small number of examples of technologies using CNT wires, using CNTs instead of metal that is a material burying a via hole formed in a multilayer wiring structure has been examined. Specifically, a wiring structure using, as an interlayer wiring for two or more conductive layers, a multilayer CNT that are stretched coaxially from a growth start point of the multilayer CNT to an end on a further side and that have a plurality of cut surfaces each brought into contact with the conductive layers in order to reduce a resistance of the multilayer wiring structure has been proposed (Patent Literature 1).

As another example, a carbon nanotube material in which an electroconductive deposition made of metal or the like is formed at an electrical junction of adjacent CNT wires in order to further improve electroconductivity of the CNT material has been proposed, and there is a disclosure that it is possible to apply such a carbon nanotube material to a wide range of applications (Patent Literature 2). Also, a heater that has a heat conductive member made of a matrix of carbon nanotubes using excellent heat conductivity that CNT wires exhibit has been proposed (Patent Literature 3).

In addition, a conductive body made of organic fiber thread coated with metal, for example, has been proposed as an example of technologies in which stranded wires are used as conductive bodies, and according to the proposal, it is possible to reduce an electric resistance value by applying more twists to the conductive body (Patent Literature 4).

On the other hand, electric wires, each of which includes a core wire configured of one or a plurality of wires and an insulating coating that coats the core wire, have been used as electric wires and signal wires in a variety of fields of vehicles, industrial devices, and the like. Copper or copper alloys are typically used as materials for the wires configuring core wires in terms of electrical characteristics, and aluminum or aluminum alloys have been proposed in recent years in terms of weight reduction. For example, a specific gravity of aluminum is about 1/3 of a specific gravity of copper, and electric conductivity of aluminum is about 2/3 of electric conductivity of copper (in a case in which the electric conductivity of pure copper is defined as a reference of 100%IACS, the electric conductivity of pure aluminum is about 66%IACS). In order to cause the same amount of current as that flowing through a copper wire to flow through an aluminum wire, it is necessary to increase the sectional area of the aluminum wire to about 1.5 times the sectional area of the copper wire. However, even if such an aluminum wire with an increased sectional area is used, the mass of the aluminum wire is about a half of the mass of the pure copper wire. Therefore, it is advantageous to use the aluminum wire in terms of weight reduction. Patent Literature 5 concerns a carbon nanotube yarn connection body and a method for producing the same.

### Document List

### Patent Literatures

Patent Literature 1: Japanese Patent Application Publication No. 2006-120730
Patent Literature 2: Japanese Translation of PCT International Application Publication No. 2015-523944
Patent Literature 3: Japanese Patent Application Publication No. 2015-181102
Patent Literature 4: Japanese Patent Application Publication No. 2015-203173
Patent Literature 5: JP 2013 047402 A

### Summary of Invention

### Technical Problem

Further enhancement of performances and functions of vehicles, industrial devices, and the like has rapidly been carried out these days, and with this trend, there has been a requirement for further improving electroconductivity in order to address an increase in the number of various electric devices, control devices, and the like disposed and to increase allowable currents for electric wires. Also, there has been a requirement for improving bendability of wires in order to prevent occurrence of abnormalities such as disconnection due to repeated motions or the like of mobile bodies, representative examples of which include vehicles and robots. On the other hand, there has also been a requirement for further weight reduction of wires in order to improve power consumption of mobile bodies such as vehicles for environmental compatibility.

It is an object of the present invention to provide a carbon nanotube strand wire, a coated carbon nanotube electric wire, and a wire harness capable of realizing electroconductivity that is equivalent to or higher than electroconductivity of a wire configured of a core wire made mainly of metal such as copper or aluminum, realizing excellent bendability, and also realizing further weight reduction.

### Solution to Problem

As a result of continuing intensive studies for achieving the aforementioned object, the present inventors produced carbon nanotube wires which included a plurality of carbon nanotube aggregates configured of a plurality of carbon nanotubes, further discovered twisting the plurality of carbon nanotube wires together and using the carbon nanotube strand wire as an electric wire, obtained knowledge that various characteristics such as electroconductivity and bendability of the carbon nanotube strand wire varied depending on a degree of twists of the plurality of carbon nanotube aggregates configuring the carbon nanotube wires, a degree of twists of the plurality of carbon nanotube wires configuring the carbon nanotube strand wire, or a combination of these ways of twists, in particular, and achieved completion of the present invention on the basis of such knowledge.

In other words, configurations of a gist of the present invention are as follows.
[1] A carbon nanotube strand wire in which a plurality of carbon nanotube wires of a plurality of bundled carbon nanotube aggregates configured of a plurality of carbon nanotubes are twisted together, in which a number of twists t1 of the carbon nanotube wires is equal to or greater than 0 and less than 2500 T/m, and a number of twists t2 of the carbon nanotube strand wire is greater than 0 and less than 2500 T/m.
[2] The carbon nanotube strand wire according to [1] described above, in which the number of twists t1 of the carbon nanotube wires is equal to or greater than 0 and less than 1000 T/m, and the number of twists t2 of the carbon nanotube strand wire is greater than 0 and less than 1000 T/m.
[3] The carbon nanotube strand wire according to [1] described above, in which the number of twists t1 of the carbon nanotube wires is equal to or greater than 1000 T/m and less than 2500 T/m, the number of twists t2 of the carbon nanotube strand wire is greater than 0 and less than 500 T/m, and a twist direction d1 of the carbon nanotube wires is one of an S direction and a Z direction, and a twist direction d2 of the carbon nanotube strand wire is another one of the S direction and the Z direction.
[4] The carbon nanotube strand wire according to [1] described above, in which the number of twists t1 of the carbon nanotube wires is greater than 0 and less than 500 T/m, the number of twists t2 of the carbon nanotube strand wire is equal to or greater than 1000 T/m and less than 2500 T/m, and a twist direction d1 of the carbon nanotube wires is one of an S direction and a Z direction, and a twist direction d2 of the carbon nanotube strand wire is another one of the S direction and the Z direction.
[5] The carbon nanotube strand wire according to [2] described above, in which the number of twists t1 of the carbon nanotube wires is equal to or greater than 0 and less than 1000 T/m, and the number of twists t2 of the carbon nanotube strand wire is greater than 0 and less than 500 T/m.
[6] The carbon nanotube strand wire according to [2] described above, in which the number of twists t1 of the carbon nanotube wires is equal to or greater than 0 and less than 500 T/m, and the number of twists t2 of the carbon nanotube strand wire is equal to or greater than 500 T/m and less than 1000 T/m.
[7] The carbon nanotube strand wire according to [2] described above, in which the number of twists t1 of the carbon nanotube wires is equal to or greater than 500 /m and less than 1000 T/m, the number of twists t2 of the carbon nanotube strand wire is equal to or greater than 500 T/m and less than 1000 T/m, and a twist direction d1 of the carbon nanotube wires is one of an S direction and a Z direction, and a twist direction d2 of the carbon nanotube strand wire is another one of the S direction and the Z direction.
[8] The carbon nanotube strand wire according to [5] described above, in which the number of twists t1 of the carbon nanotube wires is equal to or greater than 0 and less than 500 T/m, and the number of twists t2 of the carbon nanotube strand wire is greater than 0 and less than 500 T/m.
[9] The carbon nanotube strand wire according to [2] described above, in which the number of twists t1 of the carbon nanotube wires is equal to or greater than 500 T/m and less than 1000 T/m, the number of twists t2 of the carbon nanotube strand wire is greater than 0 and less than 1000 T/m, and a twist direction d1 of the carbon nanotube wires is one of an S direction and a Z direction, and a twist direction d2 of the carbon nanotube strand wire is another one of the S direction and the Z direction.
[10] The carbon nanotube strand wire according to [6] described above, in which the number of twists t1 of the carbon nanotube wires is greater than 0 and less than 500 T/m, the number of twists t2 of the carbon nanotube strand wire is equal to or greater than 500 T/m and less than 1000 T/m, and a twist direction d1 of the carbon nanotube wires is one of an S direction and a Z direction, and a twist direction d2 of the carbon nanotube strand wire is another one of the S direction and the Z direction.
[11] The carbon nanotube strand wire according to any one of [1] to [10] described above, in which an equivalent circle diameter of the carbon nanotube wires is equal to or greater than 0.01 mm and equal to or less than 30 mm, and an equivalent circle diameter of the carbon nanotube strand wire is equal to or greater than 0.1 mm and equal to or less than 60 mm.
[12] A coated carbon nanotube electric wire including: the carbon nanotube strand wire according to any one of [1] to [11] described above; and an insulating coating layer provided at a periphery of the carbon nanotube strand wire.
[13] A wire harness including the coated carbon nanotube electric wire according to [12] described above.
[14] A wiring for a robot including the coated carbon nanotube electric wire according to [12] described above.
[15] An overhead wiring for a train including the coated carbon nanotube electric wire according to [12] described above.

### Effect of Invention

According to the present invention, since the number of twists t1 of the carbon nanotube wires is equal to or greater than 0 and less than 2500 T/m, and the number of twists t2 of the carbon nanotube strand wire is greater than 0 and less than 2500 T/m, a stress caused when an external force acts is dispersed due to the twists, occurrence of stress concentration is curbed, and it is possible to curb an increase in rigidity while improving bending characteristics and thereby to realize excellent bendability. Also, the carbon nanotube wires using the carbon nanotubes as a core wire have anisotropic electric characteristics unlike a core wire made of metal, and electrical charges move with higher priority in a longitudinal direction than in a radial direction. In other words, since the carbon nanotube wires have anisotropic electroconductivity, the carbon nanotube wires have more excellent electroconductivity than electroconductivity of the core wire made of metal. On the other hand, since deviation between a direction of a central axis of the carbon nanotube strand wire and the longitudinal direction of the carbon nanotubes increases if a degree of twists of the carbon nanotube strand wire and/or a degree of twists of the carbon nanotube wires is excessively large, electroconductivity is degraded. Therefore, it is possible to curb degradation of the electroconductivity and to realize electroconductivity that is equivalent to or higher than electroconductivity of a wire configured of a core wire made mainly of metal such as copper or aluminum, by reducing both the number of twists t1 of the carbon nanotube wires and the number of twists t2 of the carbon nanotube strand wire within the aforementioned ranges. Moreover, it is possible to realize further weight reduction as compared with a coated electric wire in which a core wire is a metal wire mainly of copper, aluminum, or the like.

Also, it is possible to further improve bendability (a) by the number of twists t1 of the carbon nanotube wires being equal to or greater than 0 and less than 1000 T/m, and the number of twists t2 of the carbon nanotube strand wire being greater than 0 and less than 1000 T/m, (b) by the number of twists t1 of the carbon nanotube wires being equal to or greater than 1000 T/m and less than 2500 T/m, the number of twists t2 of the carbon nanotube strand wire being greater than 0 and less than 500 T/m, the twist direction d1 of the carbon nanotube wires being one of the S direction and the Z direction, and the twist direction d2 of the carbon nanotube strand wire being the other one of the S direction and the Z direction, or (c) by the number of twists t1 of the carbon nanotube wires being greater than 0 and less than 500 T/m, the number of twists t2 of the carbon nanotube strand wire being equal to or greater than 1000 T/m and less than 2500 T/m, the twist direction d1 of the carbon nanotube wires being one of the S direction and the Z direction, and the twist direction d2 of the carbon nanotube strand wire being the other one of the S direction and the Z direction.

Also, it is possible to improve both bendability and electroconductivity (d) by the number of twists t1 of the carbon nanotube wires being equal to or greater than 0 and less than 1000 T/m, and the number of twists t2 of the carbon nanotube strand wire being greater than 0 and less than 500 T/m, (e) by the number of twists t1 of the carbon nanotube wires being equal to or greater than 0 and less than 500 T/m, and the number of twists t2 of the carbon nanotube strand wire being equal to or greater than 500 T/m and less than 1000 T/m, or (f) by the number of twists t1 of the carbon nanotube wires being equal to or greater than 500 T/m and less than 1000 T/m, the number of twists t2 of the carbon nanotube strand wire being equal to or greater than 500 T/m and less than 1000 T/m, the twist direction d1 of the carbon nanotube wires being one of the S direction and the Z direction, and the twist direction d2 of the carbon nanotube strand wire being the other one of the S direction and the Z direction.

Moreover, it is possible to further improve both bendability and electroconductivity (g) by the number of twists t1 of the CNT wires being equal to or greater than 0 and less than 500 T/m, and the number of twists t2 of the CNT strand wire being greater than 0 and less than 500 T/m, (h) by the number of twists t1 of the CNT wires being equal to or greater than 500 T/m and less than 1000 T/m, the number of twists t2 of the CNT strand wire being greater than 0 and less than 1000 T/m, the twist direction d1 of the CNT wires being one of the S direction and the Z direction, and the twist direction d2 of the CNT strand wire being the other one of the S direction and the Z direction, or (i) by the number of twists t1 of the CNT wires being greater than 0 and less than 500 T/m, the number of twists t2 of the CNT strand wire being equal to or greater than 500 /m and less than 1000 T/m, the twist direction d1 of the CNT wires being one of the S direction and the Z direction, and the twist direction d2 of the CNT strand wire being the other one of the S direction and the Z direction.

### Brief Description of Drawings

[Fig. 1] An explanatory diagram of a coated carbon nanotube electric wire according to an embodiment of the present invention.
[Fig. 2] An explanatory diagram illustrating a twist direction of the carbon nanotube strand wire in Fig. 1.
[Fig. 3] An explanatory diagram of one carbon nanotube wire configuring the carbon nanotube strand wire in Fig. 2.
[Fig. 4] An explanatory diagram illustrating a twist direction of the carbon nanotube wire in Fig. 3.

### Description of Embodiments

Hereinafter, a coated carbon nanotube electric wire according to an embodiment of the present invention will be described with reference to drawings.

### [Configuration of coated carbon nanotube electric wire]

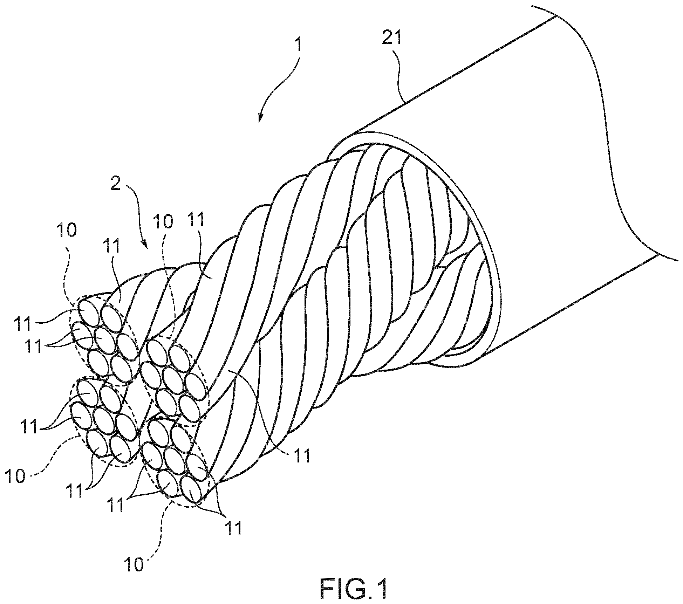

As illustrated in Fig. 1, a coated carbon nanotube electric wire according to the embodiment of the present invention (hereinafter, referred to as a "coated CNT electric wire") 1 is configured such that a peripheral surface of a carbon nanotube strand wire (hereinafter, also referred to as a "CNT strand wire") 2 is coated with an insulating coating layer 21. In other words, the CNT strand wire 2 is coated with the insulating coating layer 21 along a longitudinal direction. The entire peripheral surface of the CNT strand wire 2 is coated with the insulating coating layer 21 in the coated CNT electric wire 1. Also, the coated CNT electric wire 1 is in a form in which the insulating coating layer 21 is in direct contact with the peripheral surface of the CNT strand wire 2.

The CNT strand wire 2 is formed by a plurality of CNT wires 10 being twisted together. Although four CNT wires 10 are twisted together in the CNT strand wire 2 in Fig. 1 for convenience of explanation, several to several thousands of CNT wires 10 may be twisted together. An equivalent circle diameter of the CNT strand wire 2 is preferably equal to or greater than 0.1 mm and is more preferably equal to or greater than 0.1 mm and equal to or less than 60 mm. Also, the number of CNT wires 10 (strands) configuring the CNT strand wire 2 is, for example, equal to or greater than 3 and equal to or less than 10000.

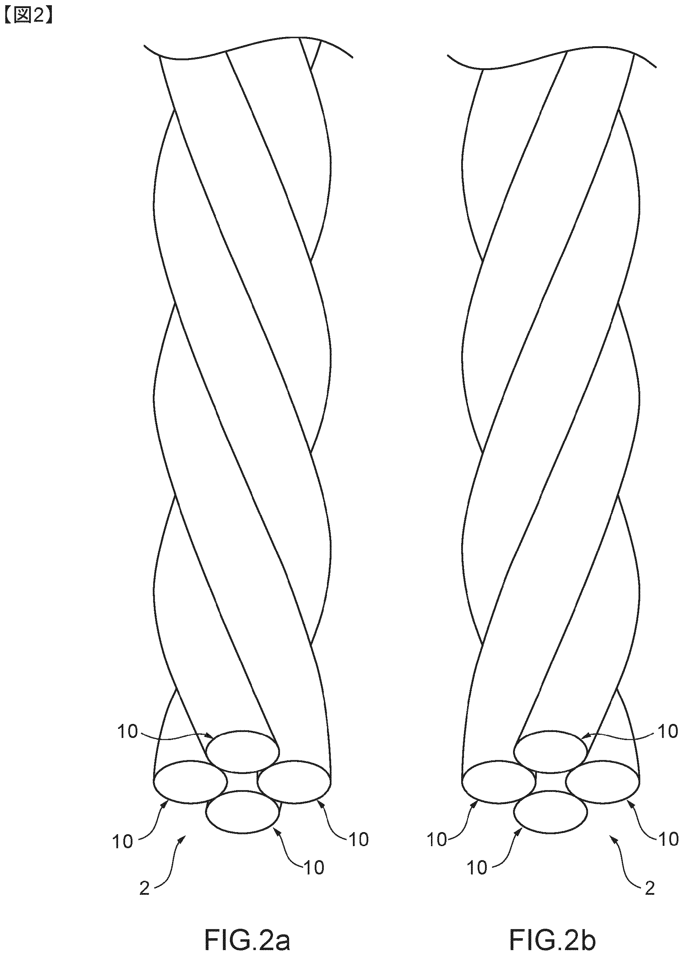

As twist directions of the CNT strand wire 2, an S direction as illustrated in Fig. 2(a) and a Z direction as illustrated in Fig. 2(b), for example, can be exemplified. The S direction indicates a direction of twists generated when lower ends out of upper and lower ends of the CNT wires 10 are twisted in a clockwise direction (rightward) with respect to a central axis of the CNT strand wire 2 in a state in which the upper ends are fixed. Also, the Z direction indicates a direction of twists generated when a lower end out of upper end lower ends of the CNT strand wire 2 is twisted in a counterclockwise direction (leftward) with respect to the central axis of the CNT strand wire 2 in a state in which the upper end is fixed. In the present embodiment, the twist direction of the CNT strand wire 2 is defined as d2. A degree of twists of the CNT strand wire 2 will be described later.

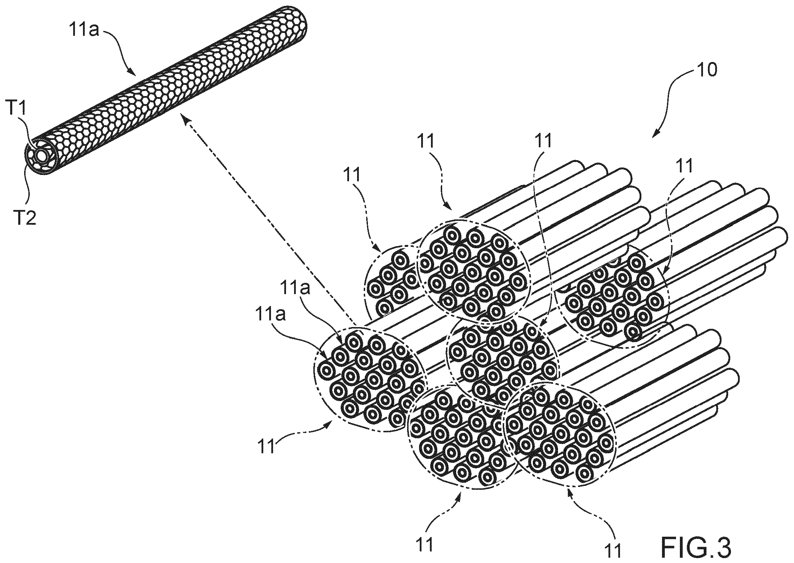

The CNT wires 10 are formed by a plurality of bundled CNT aggregates 11 configured of a plurality of CNTs 11a, 11a, ..., each of which has a layer structure of one or more layers as illustrated in Fig. 3. The state in which the CNT aggregates 11 are bundled means both a case in which there are twists in the CNT wires 10 and a case in which there are no or substantially no twists in the CNT wires 10. Here, the CNT wires mean CNT wires with a ratio of CNTs of equal to or greater than 90% by mass, in other words, CNT wires with less than 10% by mass of impurities. Note that masses of plating and dopant are excluded from calculation of the ratio of the CNTs in the CNT wires.

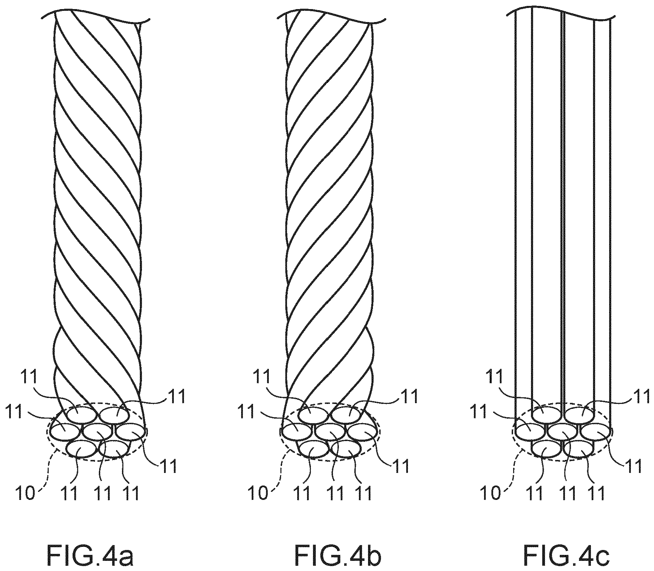

As a twist direction of the CNT wires 10, an S direction as illustrated in Fig. 4(a) or a Z direction as illustrated in Fig. 4(b) can be exemplified similarly to the CNT strand wire 2. In other words, the S direction and the Z direction of the CNT wires 10 are the same as the S direction and the Z direction that are the twist directions of the CNT strand wire 2, respectively. In the present embodiment, the twist direction of the CNT wire 10 is defined as d1. However, a case in which a longitudinal direction of the CNT aggregates 11 and a longitudinal direction of the CNT wires 10 are the same or substantially the same as illustrated in Fig. 4(c) is included for the CNT wires 10. In other words, the CNT wires 10 in which the plurality of CNT aggregates 11 are bundled in a non-twisted state are also included. An equivalent circle diameter of the CNT wires 10 is preferably equal to or greater than 0.01 mm and equal to or less than 30 mm, is more preferably equal to or greater than 0.01 mm and equal to or less than 25.0 mm, and is further preferably equal to or greater than 0.01 mm and equal to or less than 15 mm. A degree of twists of the CNT wires 10 will be described later.

The CNT aggregates 11 are bundles of CNTs 11a, each of which has a layer structure of one or more layers. The longitudinal directions of the CNTs 11a form the longitudinal direction of the CNT aggregates 11. The plurality of CNTs 11a, 11a, ... in the CNT aggregates 11 are disposed such that the longitudinal directions thereof are substantially aligned. Therefore, the plurality of CNTs 11a, 11a, ... in the CNT aggregates 11 are orientated. An equivalent circle diameter of the CNT aggregates 11 is equal to or greater than 20 nm and equal to or less than 1000 nm and is more typically equal to or greater than 20 nm and equal to or less than 80 nm, for example. A width dimension of outermost layers of the CNTs 11a is equal to or greater than 1.0 nm and equal to or less than 5.0 nm, for example.

Each CNT 11a configuring the CNT aggregates 11 is a tubular body that has a single-layer structure or a multiple-layer structure, which is called a single-walled nanotube (SWNT) or a multi-walled nanotube(MWNT), respectively. Although Fig. 3 illustrates only CNTs 11a that have a two-layer structure for convenience, the CNT aggregates 11 may include CNTs that have a layer structure of three or more layers or CNTs that have a layer structure of a single layer and may be formed of the CNTs that have a layer structure of three or more layers or the CNTs that have a layer structure of a single layer.

Each CNT 11a that has a two-layer structure has a three-dimensional mesh structure body in which two tubular bodies T1 and T2 that have a mesh structure of hexagonal lattices are disposed substantially coaxially and is called a double-walled nanotube (DWNT). The hexagonal lattices that are configuration units are six-membered rings with carbon atoms disposed at apexes thereof and are adjacent to other six-membered rings such that these are successively coupled to each other.

Properties of the CNTs 11a depend on chirality of the aforementioned tubular bodies. The chirality is roughly classified into an armchair type, a zigzag type, and a chiral type, the armchair type exhibits metallic behaviors, the zigzag type exhibits semiconducting and semi-metallic behaviors, and the chiral type exhibits semiconducting and semi-metallic behaviors. Thus, electroconductivity of the CNTs 11a significantly differ depending on which of chirality the tubular bodies have. In the CNT aggregates 11 configuring the CNT wires 10 in the coated CNT electric wire 1, it is preferable to increase a ratio of the CNTs 11a of the armchair type that exhibits metallic behaviors in terms of further improvement in electroconductivity.

On the other hand, it is known that CNTs 11a of the chiral type exhibit metallic behaviors by doping the CNTs 11a of the chiral type that exhibit semiconducting behaviors with a substance (a different kind of element) with electron donating properties or electron accepting properties. Also, electroconductivity decreases due to occurrence of scattering of conducive electrons inside metal by doping typical metal with different kinds of elements, and similarly to this, a decrease in electroconductivity is caused in a case in which the CNTs 11a that exhibit metallic behaviors are doped with different kinds of elements.

Since an effect of doping the CNTs 11a that exhibit metallic behaviors and the CNTs that exhibit semiconducting behaviors is in a trade-off relationship in terms of electroconductivity in this manner, it is theoretically desirable to separately produce the CNTs 11a that exhibit metallic behaviors and the CNTs 11a that exhibit semiconducting behaviors, perform doping processing only on the CNTs 11a that exhibit semiconducting behaviors, and then combine these CNTs 11a. However, it is difficult to selectively and separately produce the CNTs 11a that exhibit metallic behaviors and the CNTs 11a that exhibit semiconducting behaviors using current manufacturing technologies, and the CNTs 11a that exhibit metallic behaviors and the CNTs 11a that exhibit semiconducting behaviors are produced in a coexisting state. Thus, it is preferable to select a layer structure for the CNTs 11a with which the doping processing using different kinds of elements/molecules is effectively performed, in order to further improve electroconductivity of the CNT wires 10 made of a mixture of the CNTs 11a that exhibit metallic behaviors and the CNTs 11a that exhibit semiconducting behaviors.

For example, CNTs with a smaller number of layers, such as a two-layer structure or a three-layer structure, have relatively higher electroconductivity than CNTs with a larger number of layers, and the highest doping effect can be achieved by the CNTs that have a two-layer structure or a three-layer structure when the doping processing is performed. Thus, it is preferable to increase a ratio of the CNTs that have a two-layer structure or a three-layer structure in terms of further improvement in electroconductivity of the CNT wires 10. Specifically, the ratio of the CNTs that have a two-layer structure or a three-layer structure with respect to the entire CNTs is preferably equal to or greater than 50% by number and is more preferably equal to or greater than 75% by number. The ratio of the CNTs that have a two-layer structure or a three-layer structure can be calculated by observing and analyzing a section of the CNT aggregates 11 with a transmission electron microscope (TEM), selecting a predetermined number of arbitrary CNTs within a range of 50 to 200, and measuring the number of layers of each CNT.

A q value of a peak top at a (10) peak of intensity based on X-ray scattering indicating density of the plurality of CNTs 11a, 11a, ... is preferably equal to or greater than 2.0 nm⁻¹ and equal to or less than 5.0 nm⁻¹, and a fullwidth at half maximum Δq (FWHM) is preferably equal to or greater than 0.1 nm⁻¹ and equal to or less than 2.0 nm⁻¹, in order to further improve electroconductivity and heat dissipation characteristics by obtaining high density. If diameter distribution of the plurality of CNTs 11a is narrow in the CNT aggregates 11, and the plurality of CNTs 11a, 11a, ... have regular alignment, that is, a satisfactory orientation, on the basis of a measurement value of a lattice constant estimated from the (10) peak and the CNT diameter observed by Raman spectroscopy, TEM, or the like, it is possible to state that a hexagonal closest-packing structure has been formed. Therefore, electrical charges in the CNT aggregates 11 are more likely to flow along the longitudinal direction of the CNTs 11a, and electroconductivity is further improved. Also, a heat of the CNT aggregates 11 is more likely to be discharged while being smoothly delivered along the longitudinal direction of the CNTs 11a. Orientations of the CNT aggregates 11 and the CNTs 11 and an alignment structure and density of the CNTs 11a can be adjusted by appropriately selecting a spinning method such as dry spinning or wet spinning and spinning conditions for the spinning method, which will be described later.

A degree of twists of the CNT strand wire 2 and the CNT wires 10 can be classified into any of loose, gentle, tight, and very tight. Loose indicates a value within a range of the number of twists of greater than 0 and less than 500 T/m, and gentle indicates a value within a range of the number of twists of equal to or greater than 500 T/m and less than 1000 T/m. Also, tight indicates a value within a range of the number of twists of equal to or greater than 1000 and less than 2500 T/m, and very tight indicates a value within a range of the number of twists of equal to or greater than 2500 T/m.

The number of twists of the CNT strand wire 2 is a number of windings (T/m) per unit length when the plurality of CNT wires 10, 10, ... configuring a single CNT strand wire are twisted together. In the present embodiment, the number of twists of the CNT strand wire 2 is defined as t2. Also, the number of twists of the CNT wires 10 is a number of windings (T/m) per unit length when the plurality of CNT aggregates 11, 11, ... configuring a single CNT wire 10 are twisted together. In the present embodiment, the number of twists of the CNT wires 10 is defined as t1.

In the CNT strand wire 2, the number of twists t1 of the CNT wires 10 is equal to or greater than 0 and less than 2500 T/m, and the number of twists t2 of the CNT strand wire 2 is greater than 0 and less than 2500 T/m. By both the CNT wires 10 and the CNT strand wire 2 being any one of loose, gentle, and tight, a stress is dispersed due to the twists when an external force acts, occurrence of stress concentration is curbed, and it is possible to curb an increase in rigidity while improving bending characteristics and to realize excellent bendability. Also, by both the number of twists t1 of the CNT wires 10 and the number of twists t2 of the CNT strand wire 2 being caused to fall within the aforementioned ranges, a twist angle with respect to the central axis of the CNT strand wire 2 decreases, and it is possible to curb an increase in electric resistance in the longitudinal direction of the CNT strand wire 2 and thereby to realize electroconductivity that is equivalent to or greater than electroconductivity of a wire configured of a core wire made mainly of metal such as copper or aluminum.

Also, the number of twists t1 of the CNT wires 10 is preferably equal to or greater than 0 and less than 1000 T/m, and the number of twists t2 of the CNT strand wire 2 is preferably greater than 0 and less than 1000 T/m in order to further curb an increase in rigidity of the CNT strand wire 2 and to improve bendability. By the CNT wires 10 being either loose or gentle and by the CNT strand wire 2 being either loose or gentle, an increase in rigidity in the entire CNT strand wire 2 is further curbed.

Also, the number of twists t1 of the CNT wires 10 may be equal to or greater than 1000 T/m and less than 2500 T/m, and the number of twists t2 of the CNT strand wire 2 may be greater than 0 and less than 500 T/m in order to further curb an increase in rigidity of the CNT strand wire 2 and to improve bendability. At this time, the twist direction d1 of the CNT wires 10 is one of the S direction and the Z direction, and the twist direction d2 of the CNT strand wire 2 is the other one of the S direction and the Z direction. By the CNT wires 10 being tight and by the CNT strand wire 2 being loose, an increase in rigidity in the entire CNT strand wire 2 is further curbed. Also, a bias of the twist direction in the entire CNT strand wire 2 is curbed by setting the twists of the CNT wires 10 and the twists of the CNT strand wire 2 in opposite directions.

Also, the number of twists t1 of the CNT wires 10 may be greater than 0 and less than 500 T/m, and the number of twists t2 of the CNT strand wire 2 may be equal to or greater than 1000 T/m and less than 2500 T/m. At this time, the twist direction d1 of the CNT wires 10 is one of the S direction and the Z direction, and the twist direction d2 of the CNT strand wire 2 is the other one of the S direction and the Z direction. By the CNT wires 10 being loose and by the CNT strand wire 2 being tight, an increase in rigidity in the entire CNT strand wire 2 is further curbed. Also, a bias of the twist direction in the entire CNT strand wire 2 is curbed by setting the twists of the CNT wires 10 and the twists of the CNT strand wire 2 in opposite directions.

Also, the number of twists t1 of the CNT wire 10 is preferably equal to or greater than 0 and less than 1000 T/m, and the number of twists t2 of the CNT strand wire 2 is preferably greater than 0 and less than 500 T/m in order to improve both bendability and electroconductivity of the CNT strand wire 2. By the CNT wires 10 being either loose or gentle and by the CNT strand wire 2 being loose, an increase in rigidity in the entire CNT strand wire 2 is further curbed, a bias of the twist direction in the entire CNT strand wire 2 is curbed, and satisfactory electroconductivity in the longitudinal direction of the CNT strand wire 2 is achieved.

Also, the number of twists t1 of the CNT wires 10 may be equal to or greater than 0 and less than 500 T/m, and the number of twists t2 of the CNT strand wire 2 may be equal to or greater than 500 T/m and less than 1000 T/m in order to improve both bendability and electroconductivity of the CNT strand wire 2. By the CNT wires 10 being loose and by the CNT strand wire 2 being gentle, an increase in rigidity in the entire CNT strand wire 2 is further curbed, a bias of the twist direction in the entire CNT strand wire 2 is curbed, and satisfactory electroconductivity in the longitudinal direction of the CNT strand wire 2 is achieved.

Further, the number of twists t1 of the CNT wires 10 is preferably equal to or greater than 500 T/m and less than 1000 T/m, and the number of twists t2 of the CNT strand wire 2 is preferably equal to or greater than 500 T/m and less than 1000 T/m. At this time, the twist direction d1 of the CNT wires 10 is one of the S direction and the Z direction, and the twist direction d2 of the CNT strand wire 2 is the other one of the S direction and the Z direction. By the CNT wires 10 being gentle and by the CNT strand wire 2 being gentle, an increase in rigidity in the entire CNT strand wire 2 is further curbed. Also, it is possible to curb an increase in electric resistance caused by both the CNT wires 10 and the CNT strand wire 2 being gentle and to achieve satisfactory electroconductivity in the longitudinal direction of the CNT strand wire 2 by setting the twists of the CNT wires 10 and the twists of the CNT strand wire 2 in opposite directions.

In order to further improve both bendability and electroconductivity of the CNT strand wire 2, the number of twists t1 of the CNT wires 10 is more preferably equal to or greater than 0 and less than 500 T/m, and the number of twists t2 of the CNT strand wire 2 is more preferably greater than 0 and less than 500 T/m. By the CNT wires 10 being loose and by the CNT strand wire 2 being loose, an increase in rigidity in the entire CNT strand wire 2 is curbed to the maximum extent, a bias of the twist direction in the entire CNT strand wire 2 is further curbed, and further satisfactory electroconductivity in the longitudinal direction of the CNT strand wire 2 is achieved.

Also, in order to further improve both bendability and electroconductivity of the CNT strand wire 2, the number of twists t1 of the CNT wires 10 may be equal to or greater than 500 T/m and less than 1000 T/m, and the number of twists t2 of the CNT strand wire 2 may be greater than 0 and less than 1000 T/m. At this time, the twist direction d1 of the CNT wires 10 is one of the S direction and the Z direction, and the twist direction d2 of the CNT strand wire 2 is the other one of the S direction and the Z direction. By the CNT wire 10 being gentle and by the CNT strand wire 2 being either loose or gentle, an increase in rigidity in the entire CNT strand wire 2 is further curbed. Also, it is possible to curb an increase in electric resistance caused by the CNT wire 10 being gentle and to achieve further satisfactory electroconductivity in the longitudinal direction of the CNT strand wire 2 by setting the twists of the CNT wires 10 and the twists of the CNT strand wire 2 in opposite directions.

Also, in order to further improve both bendability and electroconductivity of the CNT strand wire 2, the number of twists t1 of the CNT wires 10 may be greater than 0 and less than 500 T/m, and the number of twists t2 of the CNT strand wire 2 may be equal to or greater than 500 T/m and less than 1000 T/m. At this time, the twist direction d1 of the CNT wires 10 is one of the S direction and the Z direction, and the twist direction d2 of the CNT strand wire 2 is the other one of the S direction and the Z direction. By the CNT wires 10 being loose and by the CNT strand wire 2 being gentle, an increase in rigidity in the entire CNT strand wire 2 is further curbed. In addition, it is possible to curb an increase in electric resistance caused by the CNT strand wire 2 being gentle and to achieve further satisfactory electroconductivity in the longitudinal direction of the CNT strand wire 2 by setting the twists of the CNT wire 10 and the twists of the CNT strand wire 2 in opposite directions.

As a material of the insulating coating layer 21 (see Fig. 1) formed at the periphery of the CNT wires 10, it is possible to use a material used in an insulating coating layer for a coated electric wire using metal in a core wire, and for example, it is possible to exemplify a thermoplastic resin and a thermosetting resin. Examples of the thermoplastic resin include polytetrafluoroethylene (PTFE), polyethylene, polypropylene, polyacetal, polystyrene, polycarbonate, polyamide, polyvinyl chloride, polyvinyl acetate, polyurethane, polymethyl methacrylate, an acrylonitrile butadiene styrene resin, an acrylic resin, and the like. Examples of the thermosetting resin include polyimide, a phenol resin, and the like. One of these may be used alone, or two or more kinds of these may appropriately be mixed and used.

The insulating coating layer 21 may be formed in one layer as illustrated in Fig. 1 or may be formed in two or more layers instead. For example, the insulating coating layer may have a first insulating coating layer formed at the periphery of the CNT wires 10 and a second insulating coating layer formed at the periphery of the first insulating coating layer. In this case, the insulating coating layer may be formed such that the content of other CNTs contained in the second insulating coating layer is smaller than the content of other CNTs contained in the first insulating coating layer. Also, one layer or two or more layers of the thermosetting resin may be further provided on the insulating coating layer 21 as needed. In addition, the aforementioned thermosetting resin may contain a filler material that has a fiber form or a particle form.

In the coated CNT electric wire 1, a proportion of the sectional area of the insulating coating layer 21 in the radial direction with respect to the sectional area of the CNT strand wire 2 in the radial direction is within a range of equal to or greater than 0.001 and equal to or less than 1.5. By the proportion of the sectional areas falling within the range of equal to or greater than 0.001 and equal to or less than 1.5, it is possible to obtain lighter CNT wires 10 than a core wire made of copper, aluminum, or the like, to reduce the thickness of the insulating coating layer 21, thereby to sufficiently secure insulation reliability, and to obtain excellent heat dissipation characteristics against a heat of the CNT strand wire 2. Also, it is possible to realize weight reduction as compared with metal coated electric wire of copper, aluminum, or the like even if the insulating coating layer is formed.

In addition, it becomes easy to maintain the shape of the coated CNT electric wire 1 in the longitudinal direction by coating the external surface of the CNT wires 10 with the insulating coating layer 21 at the aforementioned proportion of the sectional areas. Thus, it is possible to enhance handling ability when the coated CNT electric wire 1 is arranged.

Further, since minute irregularity is formed on the external surface of the CNT wires 10, adhesiveness between the CNT wires 10 and the insulating coating layers 21 can be improved, thereby curbing peeling between the CNT wires 10 and the insulating coating layer 21 as compared with a coated electric wire using a core wire made of aluminum or copper.

Although the proportion of the sectional areas is not particularly limited as long as the proportion of the sectional areas falls within the range of equal to or greater than 0.001 and equal to or less than 1.5, an upper limit value of the proportion of the sectional areas is preferably 1.0 and is particularly preferably 0.27 in order to further improve weight reduction of the coated CNT electric wire 1 and heat dissipation characteristics against a heat of the CNT wires 10.

Although the sectional area of the CNT strand wire 2 in the radial direction is not particularly limited in a case in which the proportion of the sectional areas falls within the range of equal to or greater than 0.001 and equal to or less than 1.5, the sectional area of the CNT strand wire 2 in the radial direction is preferably equal to or greater than 0.1 mm² and equal to or less than 2300 mm², is further preferably equal to or greater than 0.1 mm² and equal to or less than 2000 mm², and is particularly preferably equal to or greater than 0.1 mm² and equal to or less than 1800 mm², for example. Also, although the sectional area of the insulating coating layer 21 in the radial direction is not particularly limited, the sectional area of the insulating coating layer 21 in the radial direction is preferably equal to or greater than 0.1 mm² and equal to or less than 3650 mm² and is particularly preferably equal to or greater than 0.1 mm² and equal to or less than 3500 mm², for example, in terms of a balance between insulation reliability and heat dissipation ability.

The sectional areas can be measured from an image of scanning electron microscope (SEM) observation, for example. Specifically, an area obtained by obtaining an SEM image (100 times to 10,000 times) of a section of the coated CNT electric wire 1 in the radial direction and subtracting an area of the material of the insulating coating layer 21 that has entered the inside of the CNT strand wire 2 from an area of a portion surrounded by the periphery of the CNT strand wire 2 and a total of an area of a portion of the insulating coating layer 21 that coats the periphery of the CNT strand wire 2 and an area of the material of the insulating coating layer 21 that has entered the inside of the CNT strand wire 2 are defined as the sectional area of the CNT strand wire 2 in the radial direction and the sectional area of the insulating coating layer 21 in the radial direction, respectively. The sectional area of the insulating coating layer 21 in the radial direction also includes the resin that has entered between an interspace of the CNT strand wire 2.

The thickness of the insulating coating layer 21 in a direction that perpendicularly intersects the longitudinal direction (that is, the radial direction) is preferably uniformized in order to improve insulation property and abrasion resistance of the coated CNT electric wire 1. Specifically, the thickness deviation rate of the insulating coating layer 21 is equal to or greater than 50% in order to improve insulation property and abrasion resistance and is preferably equal to or greater than 80% in order to improve handling ability in addition to these insulation property and abrasion resistance. Note that the "thickness deviation rate" means a value obtained by calculating α = (a minimum value of the thickness of the insulating coating layer 21/a maximum value of the thickness of the insulating coating layer 21) × 100 for each of sections in the radial direction at every 10 cm in arbitrary 1.0 m of the coated CNT electric wire 1 in the longitudinal direction and averaging the α values calculated at the sections. Also, the thickness of the insulating coating layer 21 can be measured from an image of SEM observation by circularly approximating the CNT strand wire 2, for example. Here, a center side in the longitudinal direction indicates a region located at the center when seen in the longitudinal direction of the wire.

The thickness deviation rate of the insulating coating layer 21 can be improved by adjusting a tensile force applied to the CNT wires 10 in the longitudinal direction when the CNT wires 10 are caused to pass through a die in an extrusion process in a case in which the insulating coating layer 21 is formed at the peripheral surface of the CNT wire 10 through extrusion coating, for example.

### [Method for manufacturing coated carbon nanotube electric wire]

Next, an exemplary method for manufacturing the coated CNT electric wire 1 according to the embodiment of the present invention will be described. The coated CNT electric wire 1 can be manufactured by manufacturing the CNTs 11a first, twisting the plurality of obtained CNTs 11a in the S direction or the Z direction together to form the CNT wires 10, further twisting the plurality of CNT wires 10 in the S direction or the Z direction together to form the CNT strand wire 2, and coating the peripheral surface of the CNT strand wire 2 with the insulating coating layer 21.

The CNTs 11a can be produced by a method such as a floating catalyst method (Japanese Patent No. 5819888) or a substrate method (Japanese Patent No. 5590603). The strands of the CNT wires 10 can be produced by, for example, dry spinning (Japanese Patent Nos. 5819888, 5990202, and 5350635), wet spinning (Japanese Patent Nos. 5135620, 5131571, and 5288359), liquid crystal spinning (Japanese Translation of PCT International Application Publication No. 2014-530964), or the like. Also, the CNT strand wire 2 can be produced by fixing both ends of the produced CNT wires to substrates and rotating one of the facing substrates, for example.

At this time, orientations of the CNTs configuring the CNT aggregates can be adjusted by appropriately selecting a spinning method such as dry spinning, wet spinning, or liquid crystal spinning and spinning conditions for the spinning method, for example.

As a method for coating the peripheral surface of the CNT strand wire 2 obtained as described above with the insulating coating layer 21, a method of coating a core wire made of aluminum or copper with the insulating coating layer can be used, and for example, it is possible to exemplify a method of melting a thermoplastic resin that is a raw material of the insulating coating layer 21 and extruding the thermoplastic resin to the circumference of the CNT strand wire 2 to coat the CNT strand wire 2 with the thermoplastic resin or a method of applying the thermoplastic resin to the circumference of the CNT strand wire 2.

The coated CNT electric wire 1 or the CNT strand wire 2 produced by the aforementioned method is suitable for utilization as an overhead wiring for a train that is exposed to an environment in which a weather, a temperature, and the like vary, a wiring for a robot used in an extreme environment, and the like due to the CNTs with excellent corrosion resistance. Examples of the extreme environment include an inside of a nuclear reactor, a high-temperature and high-humidity environment, an inside of water such as an inside of deep sea, an outer space, and the like. Particularly, a lot of neutrons are generated in a nuclear reactor, and in a case in which a conductive body configured of copper or a copper alloy is used as a wiring for a mobile body or the like, the copper or the copper alloy absorbs the neutrons and changes into radioactive zinc. The radioactive zinc has a half-life that is as long as 245 days and continuously emits radiation. In other words, the copper or the copper alloy changes into a radioactive substance due to the neutrons and becomes a cause that have various adverse influences on the outside. On the other hand, the aforementioned reaction is unlikely to occur, and generation of the radioactive substance can be curbed, by using the CNT strand wire configured of the CNTs as a wiring.

The coated CNT electric wire 1 according to the embodiment of the present invention can be used as a general electric wire such as a wire harness, or a cable may be produced from the general electric wire using the coated CNT electric wire 1.

### Examples

Although examples of the present invention will be described below, the present invention is not limited to the following examples unless modifications otherwise depart from the gist of the present invention.

### (Concerning Examples 1 to 48 and Comparative Examples 1 to 32) Concerning method for manufacturing CNT wires

First, strands (element wires) of CNT wires were obtained by a dry spinning method (Japanese Patent No. 5819888) of directly spinning CNTs produced by a floating catalyst method or a method of wet-spinning the CNTs (Japanese Patent Nos. 5135620, 5131571, and 5288359), and the CNT wires were then bundled or twisted together with adjusted twist directions and numbers of twists, thereby obtaining CNT wires with sectional areas as shown in Tables 1 to 5.

Next, CNT strands that are the CNT wires manufactured by the various spinning methods were selected to obtain strand wires with predetermined diameters. Thereafter, each strand was caused to pass in a normal line shape through a hole at the center of a disk-shaped substrate with the hole opened therein, and the CNT strand was wound around and fixed to the substrate. Ends of the CNT strands on the other side were collected at and fixed to one location, and the CNT strands were then twisted by rotating the substrate such that predetermined numbers of windings were obtained. Then, the plurality of CNT wires were twisted together by adjusting the twist directions and the numbers of twists to satisfy Tables 1 to 5, and CNT strand wires with sectional areas as shown in Tables 1 to 5 were obtained.

### (a) Measurement of sectional areas of CNT strand wires and CNT wires

A section of each CNT strand wire in the radial direction was cut using an ion milling device (IM4000 manufactured by Hitachi High-Tech Corporation), and the sectional area of each CNT strand wire in the radial direction was then measured from an SEM image obtained by a scanning electron microscope (SU8020 manufactured by Hitachi High-Tech Corporation, magnification: 100 times to 10,000 times). Similar measurement was repeated at every 10 cm from arbitrary 1.0 m of the coated CNT electric wire on the center side in the longitudinal direction, and an average value thereof was defined as a sectional area of the CNT strand wire in the radial direction. Note that the resin that entered the inside of the CNT strand wire was not included in the sectional area of the CNT strand wire.

Similarly, a section of each CNT wire in the radial direction was cut using an ion milling device (IM4000 manufactured by Hitachi High-Tech Corporation), and the sectional area of the CNT wire in the radial direction was then measured from an SEM image obtained by a scanning electron microscope (SU8020 manufactured by Hitachi High-Tech Corporation, magnification: 100 times to 10,000 times), for the CNT wire as well. Similar measurement was repeated at every 10 cm from arbitrary 1.0 m of the coated CNT electric wire on the center side in the longitudinal direction, and an average value thereof was defined as a sectional area of the CNT wire in the radial direction. The resin that entered the inside of the CNT wire was not included in the sectional area of the CNT wire.

### (b) Measurement of numbers of twists of CNT strand wires and CNT wires

Twisted wires were produced by bundling a plurality of element wires and twisting, in a state in which one end was fixed, another end a predetermined number of times. The numbers of twists were represented as values (unit: T/m) obtained by dividing the number of times (T) the wires were twisted by the lengths (m) of the wires.

Results of the aforementioned measurement of the CNT strand wires are shown in Tables 1 to 5 below.

Next, the following evaluation was conducted for the CNT strand wires produced as described above.

### (1) Electroconductivity

CNT aggregates were connected to a resistance measurement machine (manufactured by Keithley Instruments; device name "DMM 2000"), and resistance measurement was conducted using a four-terminal method. As for resistivity, resistivity was calculated on the basis of a calculation equation of r = RA/L (R: resistance, A: sectional area of CNT aggregates, L: measured length). The length of each test piece was set to 40 mm. Note that the aforementioned test was conducted on every three CNT aggregates before and after heating processing at 150° for 1 hour (N = 3), and an average value was obtained and defined as resistivity (Ω•cm) of each of the CNT aggregates before and after the heating. Lower resistivity was more preferable, and in the examples, resistivity of equal to or less than 7.5 × 10⁻⁵ Ω•cm before the heating was evaluated as being in a passing level, a rate (%) of increase in resistivity after the heating processing [(resistivity after heating processing - resistivity before heating processing) × 100/resistivity before heating processing] of equal to or less than 35% was evaluated as being in a passing level, a case in which both the aforementioned resistivity before the heating processing and the rate of increase in resistivity after the heating were in the passing level was evaluated as being significantly satisfactory "Excellent", a case in which only the resistivity before the heating processing was in the passing level was evaluated as being satisfactory "Good", and a case in which both the aforementioned resistivity before the heating processing and the rate of increase in resistivity were not in the passing level was evaluated as being inferior "Poor".

### (2) Bendability

By the method in accordance with IEC 60227-2, each 100 cm coated CNT electric wire was bent at 90 degrees under a load of 500 gf 1000 times. Then, sectional surfaces were observed at every 10 cm in the axial direction, and whether or not peeling had occurred between the conductive body and the coating was checked. A case in which no peeling occurred was evaluated as being significantly satisfactory "Excellent", a case in which partial peeling occurred within an allowable level of product quality was evaluated as being satisfactory "Good", and a case in which the conductive body was disconnected was evaluated as being inferior "Poor".

Results of the aforementioned evaluation are shown in Tables 1 to 5 below.

**[Table 1]**

| | Equivalent circle diameter of CNT wire | Sectional area of CNT wire | Number of twists of CNT wire | Degree of twists of CNT wire | Twist: direction of CNT wire | Equivalent circle diameter of CNT strand wire | Sectional area of CNT strand wire | Number of twists of CNT strand wire | Degree of twists of CNT strand wire | Twist: direction of CNT strand wire | Electroconductivit y | Bandability |
|---|---|---|---|---|---|---|---|---|---|---|---|---|
| | (mm) | (mm²) | (T/m) | | | (mm) | (mm²) | (T/m) | | | | |
| Example 1 | 0.020 | 0.001 | 1 | Loose | S dierctoin | 0.4 | 0.1 | 1 | Loonse | Z direction | Excellent | Excellent |
| Example 2 | 0.020 | 0.001 | 1 | | | 4.2 | 14.0 | 100 | | 8 dierction | Excellent | Excellent |
| Example 3 | 0.020 | 0.001 | 1 | | | 27.4 | 588.0 | 500 | Gentle | Z dierction | Excellent | Excellent |
| Example 4 | 0.158 | 0.070 | 100 | | | 30.11 | 750.0 | 700 | | 8 dierction | Good | Excellent |
| Example 5 | 0.179 | 0.101 | 100 | | | 29.2 | 669.0 | 1200 | Tight | Z direction | Excellent | Excellent |
| Example 6 | 0.120 | 0.045 | 250 | | | 34.5 | 932.0 | 1900 | | S direction | Good | Good |
| Comparative 1 | 0.130 | 0.063 | 250 | | | 39.8 | 1244.0 | *2500* | Very tight | Z dierction | Poor | Poor |
| Comparative Example 2 | 0.110 | 0.038 | 400 | | | 43.7 | 1500.0 | *3000* | | S dierction | Poor | Good |
| Example 7 | 0.020 | 0.001 | 0.020 | | Z dierction | 0.4 | 0.1 | 1 | Loose | Z direction | Excellent | Excellent |
| Example 8 | 0.020 | 0.001 | 0.020 | | | 4.2 | 14.0 | 100 | | S diection | Excellent | Excellent |
| Example 9 | 0.020 | 0.001 | 0.020 | | | 27.4 | 588.0 | 500 | Gentle | Z direction | Good | Excellent |
| Example 10 | 0.158 | 0.076 | 100 | | | 30.9 | 750.0 | 700 | | 8 diection | Excellent | Excellent |
| Example 11 | 0.179 | 0.101 | 100 | | | 29.2 | 669.0 | 1200 | Tight | Z direction | Good | Good |
| Example 12 | 0.120 | 0.045 | 250 | | | 34.5 | 932.0 | 1900 | | S dierction | Good | Excellent |
| Comparative Example 3 | 0.130 | 0.063 | 260 | | | 30.8 | 1244.0 | *2500* | Very tight | Z direction | Poor | Good |
| Comparative Example 4 | 0.110 | 0.038 | 400 | | | 43.7 | 1500.0 | *3000* | | 8 direction | Poor | Roor |
| Nate The underlines and italiscs In the table indicate that they are beyond the range of the present invention. | | | | | | | | | | | | |

**[Table 2]**

| | Equivalent circle diameter of CNT wire | Sectional area of CNT wire | Number of twists of CNT wire | Degree of twists of CNT wire | Twistdirection of CNT wire | Equivalent circle diameter of CNT strand wire | Sectional area of CNT strand wire | Number of twists of CNT strand wire | Degree of twists of CNT strand wire | Twist: direction of CNT strand wire | Electroconductivit y | Bendability |
|---|---|---|---|---|---|---|---|---|---|---|---|---|
| | (mm) | (mm²) | (T/m) | | | (mm) | (mm²) | (T/m) | | | | |
| Example 13 | 0.145 | 0.088 | 660 | Gentle | S direction | 28 | 550 | 1 | Loose | Z direction | Excellent | Excellent |
| Example 14 | 0.155 | 0.075 | 630 | | | 31 | 748 | 100 | | S direction | Good | Excellent |
| Example 15 | 0.178 | 0.099 | 701 | | | 27 | 559 | 500 | Gentle | Z direction | Excellent | Excellent |
| Example 16 | 0.114 | 0.041 | 700 | | | 38 | 998 | 700 | | S directionn | Good | Excellent |
| Example 17 | 0.189 | 0.112 | 750 | | | 40 | 1256 | 1200 | Tight | Z dierction | Good | Poor |
| Example 18 | 0.195 | 0.119 | 830 | | | 47 | 1760 | 1900 | | S dierction | Good | Good |
| Comparative Example 5 | 0.146 | 0.067 | 850 | | | 38 | 1120 | *2500* | Very tight | Z direction | Poor | Poor |
| Example 6 | 0.176 | 0.097 | 880 | | | 42 | 1400 | *3000* | | S direction | Poor | Poor |
| Example 19 | 0.145 | 0.088 | 550 | | Z direction | 26 | 550 | 1 | Loose | Z direction | Good | Excellent |
| Example 20 | 0.155 | 0.075 | 630 | | | 31 | 748 | 100 | | S direction | Excellent | Excellent |
| Example 21 | 0.178 | 0.099 | 701 | | | 27 | 559 | 500 | Gentle | Z direction | Good | Excellent |
| Example 22 | 0.114 | 0.041 | 700 | | | 36 | 998 | 700 | | S direction | Excellent | Excellent |
| Example 23 | 0.189 | 0.112 | 750 | | | 40 | 1256 | 1200 | Tight | Z direction | Good | Good |
| Example 24 | 0.195 | 0.119 | 830 | | | 47 | 1750 | 1900 | | S direction | Good | Poor |
| Comparative Example 7 | 0.146 | 0.067 | 850 | | | 38 | 1120 | *2500* | Very tight | Z direction | Poor | Poor |
| Comparative Example8 | 0175 | 0.097 | 880 | | | 42 | 1400 | *3000* | | S direction | Poor | Poor |
| Note: The underlines and italics In the table indicate that they are beyond the range of the present invention. | | | | | | | | | | | | |

**[Table 3]**

| | Equivalent circle diameter of CNT wire | Sectional area d CNT wire | Number of twists of CNT wire | Degree of twists of CNT wire | CNT wire | Equivalent circle diameter of strand wire | Sectional area of CNT strand wire | Number of twists of CNT strand wire | Degree of twists of CNT strand wire | Twist directionof CNT strand wi.. | Electroconductivity | Bendability |
|---|---|---|---|---|---|---|---|---|---|---|---|---|
| | (mm) | (mm²) | (T/m) | | | (mm) | (mm²) | (T/m) | | | | |
| Example 25 | 0.200 | 0.128 | 1020 | Tight | S direction | 39 | 1200 | 3 | Loose | Z direction | Good | Excellent |
| Example 26 | 0.193 | 0.117 | 1160 | | | 39 | 1200 | 100 | | S direction | Good | Good |
| Example 27 | 0.190 | 0.113 | 1400 | | | 41 | 1300 | 500 | Gentle | Z direction | Good | Poor |
| Example 28 | 0.169 | 0.090 | 1490 | | | 41 | 1320 | 700 | | S direction | Good | Good |
| Example 29 | 0.166 | 0.087 | 1900 | | | 44 | 1500 | 1200 | Tight | Z direction | Good | Poor |
| Exomple 30 | 0.171 | 0.092 | 1750 | | | 44 | 1550 | 1900 | | 8 direction | Good | Poor |
| Comarative Example 9 | 0.180 | 0.102 | 1800 | | | 48 | 1800 | *2500* | Very tight | Z direction | Poor | Poor |
| Comparative Example 10 | 0.127 | 0.051 | 1930 | | | 48 | 1810 | *3000* | | S direction | Poor | Poor |
| Example 31 | 0.200 | 0.128 | 1020 | | Z direction | 39 | 1200 | 6 | Loose | Z direction | Good | Good |
| Example 32 | 0.193 | 0.117 | 1160 | | | 39 | 1200 | 100 | | S direction | Good | Excellent |
| Example 33 | 0.190 | 0.113 | 1400 | | | 41 | 1300 | 500 | Gentle | Z direction | Good | Good |
| Example 34 | 0.169 | 0.090 | 1490 | | | 41 | 1320 | 700 | | S direction | Good | Poor |
| Example 35 | 0.166 | 0.087 | 1600 | | | 44 | 1500 | 1200 | Tight | Z direction | Good | Poor |
| Exomple 36 | 0.171 | 0.092 | 1750 | | | 44 | 1550 | 1900 | | 8 direction | Good | Poor |
| Comparative Example 11 | 0.180 | 0.102 | 1800 | | | 48 | 1800 | *2500* | Very tight | Z direction | Poor | Poor |
| CoparativeExemple 12 | 0.127 | 0.051 | 1930 | | | 48 | 1810 | *3000* | | S _{d}irecibn | Poor | Poor |
| Note: The underlines and italics in the table Indicate that they are beyond the range of the present invention. | | | | | | | | | | | | |

**[Table 4]**

| | Equivalent circle diameter of CNT wire | Sectional area of CNT wire | Nmber of twists of CNT wire | Degree of twists of CNT wire | Twists direction of CNT wire | Equivalent circle diameter of CNT strand wire | Sectional area of CNT strand wire | Number of twists of CNT strand wire | Degree of twists of CNT strand wire | Twist direction of CNT strand wire | Electreconductivity | Bendability |
|---|---|---|---|---|---|---|---|---|---|---|---|---|
| | (mm) | (mm²) | (T/m) | | | (mm) | (mm²) | (T/m) | | | | |
| Comparative Exemple 13 | 0.200 | 0.126 | *2560* | Very tight | S direction | 39 | 1203 | 1 | Loose | Z direction | Poor | Poor |
| Comparative Exemple 14 | 0.188 | 0.111 | *3003* | | | 40 | 1250 | 100 | | S direction | Poor | Good |
| Example 15 | 0.134 | 0056 | *4430* | | | 46 | 1690 | 500 | Gentle | Z direction | Poor | Poor |
| Comparative Exemple 16 | 0.178 | 0.090 | *4800* | | | 47 | 1720 | 700 | | 8 direction | Poor | Poor |
| Comparative Example 17 | 0.198 | 0.123 | *5555* | | | 49 | 1900 | 1200 | Tight | Z direction | Poor | Poor |
| Comparative Example 18 | 0.166 | 0.076 | *6500* | | | 54 | 2300 | 1900 | | 8 direction | Poor | Poor |
| Comparative Example 19 | 0.110 | 0.038 | *10000* | | | 56 | 2500 | *2500* | Very tight | Z direction | Poor | Poor |
| Comparative Example 20 | 0.177 | 0.088 | *11200* | | | 59 | 2700 | *3000* | | 8 direction | Poor | Poor |
| Comparative Example 21 | 0.200 | 0.126 | *2560* | | Z direction | 39 | 1203 | 1 | Loose | Z direction | Poor | Good |
| Comparative Example 22 | 0.188 | 0.111 | *3003* | | | 40 | 1250 | 100 | | 8 direction | Poor | Poor |
| Comparative Example 23 | 0.134 | 0.056 | *4430* | | | 46 | 1900 | 500 | Gentle | Z direction | Poor | Poor |
| Comparative Examplee 24 | 0.178 | 0.090 | *4800* | | | 47 | 1720 | 700 | | 8 direction | Poor | Poor |
| Comparative Example 25 | 0.198 | 0.123 | *5555* | | | 49 | 1900 | 1200 | Tight | Z directiln | Poor | Poor |
| Comparative Exemple 26 | 0.166 | 0.076 | *6500* | | | 54 | 2300 | 1900 | | 8 direction | Poor | Poor |
| Comparative Exemple 27 | 0.110 | 0.038 | *10000* | | | 56 | 2500 | *2500* | Very tight | Z direction | Poor | Poor |
| Comparative Example 28 | 0.177 | 0.098 | *11200* | | | 59 | 2700 | *3000* | | S direction | Poor | Poor |
| Note: The underlines and **italics** in the table indicate that they are beyond the range of the present invention. | | | | | | | | | | | | |

**[Table 5]**

| | Equivalent circle diameter of CNT wire | Sectional area of CNT wire | Number of twists of CNT wire | Degree of twists of CNT wire | Twist direction of CNT wire | Equivalent circle diameter of CNT strand wire | Sectional area of CNT strand wire | Number of twists of CNT strand wire | Degree of twists of CNT strand wire | Twist direction of CNT strand wire | Electroconductivit y | Bendability |
|---|---|---|---|---|---|---|---|---|---|---|---|---|
| | (mm) | (mm²) | (T/m) | | | (mm) | (mm²) | (T/m) | | | | |
| Example 37 | 2.330 | 4.262 | 5 | Loose | S direction | 7 | 38 | 1 | Loose | Z direction | Excellent | Exœllent |
| Example 38 | 28.340 | 630.477 | 140 | | | 57 | 2522 | 100 | | S direction | Excellent | Excellent |
| Example 39 | 7.340 | 42.292 | 578 | Gentle | | 21 | 346 | 500 | Gentle | Z direction | Excellent | Excellent |
| Example 40 | 30.000 | 706.500 | 904 | | | 60 | 2826 | 700 | | S direction | Good | Good |
| Example 41 | 6.470 | 23.488 | 1100 | Tight | | 16 | 201 | 1200 | Tight | Z direction | Good | Poor |
| Example 42 | 21.220 | 353.476 | 1800 | | | 42 | 1414 | 1900 | | 8 direction | Good | Poor |
| Comparative Example 29 | 9.220 | 66.732 | *9500* | Very tight | | 30 | 707 | *2500* | Very tight | Z direction | Poor | Poor |
| Comparative Example 30 | 15.000 | 178.625 | *12000* | | | 45 | 1590 | *3000* | | 8 direction | Poor | Poor |
| Example 43 | 2.330 | 4.262 | 5 | Loose | Z direction | 7 | 38 | 1 | Loose | Z direction | Excellent | Excellent |
| Example 44 | 28.340 | 630.477 | 140 | | | 57 | 2522 | 100 | | S direction | Excellent | Excellent |
| Example 46 | 7.340 | 42.292 | 578 | Gentle | | 21 | 346 | 500 | Gentle | Z direction | Excellent | Excellent |
| Example 46 | 30.000 | 706.500 | 904 | | | 60 | 2826 | 700 | | 8 direction | Good | Good |
| Example 47 | 5.470 | 23.488 | 1100 | Tight | | 16 | 201 | 1200 | Tight | Z direction | Good | Poor |
| Example 48 | 21.220 | 353.476 | 1800 | | | 42 | 1414 | 1900 | | S direction | Good | Poor |
| Comparative Example 31 | 9.220 | 66.732 | *9500* | Very tight | | 30 | 707 | *2500* | Very tight | Z direction | Poor | Poor |
| Comparative | 15.000 | 176.625 | *12000* | | | 45 | 1590 | *3000* | | 8 direction | Poor | Poor |
| Note: The underlines and italics in the table indicate that they are beyond the range of the present invention. | | | | | | | | | | | | |

In Examples 1 to 12, 37, 38, 43, and 44, the CNT wires were loose, the CNT strand wires were ranged from loose to tight, and both electroconductivity and bendability were evaluated as being satisfactory or better as shown in Tables 1 and 5 above. In Examples 1 to 3, 5, 7, 8, 10, 37, 38, 43, and 44, in particular, both electroconductivity and bendability were evaluated as being significantly satisfactory.

On the other hand, in Comparative Examples 1 and 4, the CNT wires were loose, the CNT strand wires were very tight, the CNT wires and the CNT strand wires were twisted in opposite directions (one of the CNT wires and the CNT strand wires was twisted in the S direction, and the other was twisted in the Z direction), and both electroconductivity and bendability were inferior. In Comparative Examples 2 and 3, the CNT wires were loose, the CNT strand wires were very tight, the CNT wires and the CNT strand wires were twisted in the same direction (both the CNT wires and the CNT strand wires were twisted in the S direction, or both the CNT wires and the CNT strand wires were twisted in the Z direction), and electroconductivity was inferior.

Also, in Examples 13 to 24, 39, 40, 45, and 46, the CNT wires were gentle, the CNT strand wires were ranged from loose to tight, and satisfactory electroconductivity was achieved as shown in Tables 2 and 5. In Examples 13 to 16, 19 to 22, 39, 40, 45, and 46, in particular, the CNT wires were gentle, the CNT strand wires were ranged from loose to gentle, and both electroconductivity and bendability were evaluated as being satisfactory or better. In Examples 18 and 23, the CNT wires were gentle, the CNT strand wires were tight, the CNT wires and the CNT strand wires were twisted in the same direction (both the CNT wires and the CNT strand wires were twisted in the S direction, or both the CNT wires and the CNT strand wires were twisted in the Z direction), and both electroconductivity and bendability were evaluated as being satisfactory. In Examples 17 and 24, the CNT wires were gentle, the CNT strand wires were tight, the CNT wires and the CNT strand wires were twisted in opposite directions (one of the CNT wires and the CNT strand wires was twisted in the S direction, and the other was twisted in the Z direction), and satisfactory electroconductivity was achieved while bendability was poor.

On the other hand, in Comparative Examples 5 to 8, the CNT wires were gentle, the CNT strand wires were very tight, and both electroconductivity and bendability were inferior.

Also, in Examples 25 to 36, 41, 42, 47, and 48, the CNT wires were tight, the CNT strand wires were ranged from loose to tight, and satisfactory electroconductivity was achieved as shown in Tables 3 and 5. In Examples 25, 26, 31, and 32, in particular, the CNT wires were tight, the CNT strand wires were loose, and both electroconductivity and bendability were evaluated as being satisfactory or better. In Examples 28 and 33, the CNT wires were tight, the CNT strand wires were gentle, the CNT wires and the CNT strand wires were twisted in the same direction (both the CNT wires and the CNT strand wires were twisted in the S direction, or both the CNT wires and the CNT strand wires were twisted in the Z direction), and both electroconductivity and bendability were evaluated as being satisfactory. In Examples 27 and 34, the CNT wires were tight, the CNT strand wires were gentle, the CNT wires and the CNT strand wires were twisted in opposite directions (one of the CNT wires and the CNT strand wires was twisted in the S direction, and the other was twisted in the Z direction), and satisfactory electroconductivity was achieved while bendability was poor. Also, in Examples 29, 30, 35, 36, 41, 42,47, and 48, the CNT wires were tight, the CNT strand wires were tight, and satisfactory electroconductivity was achieved while bendability was poor.

On the other hand, in Comparative Examples 9 to 12, the CNT wires were tight, and the CNT strand wires were very tight, and both electroconductivity and bendability were inferior.

Also, in Comparative Examples 13 to 32, the CNT wires were very tight, the CNT strand wires were ranged from loose to very tight, and electroconductivity was inferior as shown in Tables 4 and 5.

### List of Reference Signs

- 1: coated carbon nanotube electric wire (coated CNT electric wire),
- 2: carbon nanotube strand wire (CNT strand wire),
- 10: carbon nanotube wire (CNT wire),
- 11: carbon nanotube aggregate (CNT aggregate),
- 11a: carbon nanotube (CNT),
- 21: insulating coating layer

## Claims

1. A carbon nanotube strand wire in which a plurality of carbon nanotube wires of a plurality of bundled carbon nanotube aggregates configured of a plurality of carbon nanotubes are twisted together,
wherein a number of twists t1 of the carbon nanotube wires is equal to or greater than 0 and less than 2500 T/m, and
a number of twists t2 of the carbon nanotube strand wire is greater than 0 and less than 2500 T/m.

2. The carbon nanotube strand wire according to claim 1,
wherein the number of twists t1 of the carbon nanotube wires is equal to or greater than 0 and less than 1000 T/m, and
the number of twists t2 of the carbon nanotube strand wire is greater than 0 and less than 1000 T/m.

3. The carbon nanotube strand wire according to claim 1,
wherein the number of twists t1 of the carbon nanotube wires is equal to or greater than 1000 T/m and less than 2500 T/m,
the number of twists t2 of the carbon nanotube strand wire is greater than 0 and less than 500 T/m, and
a twist direction d1 of the carbon nanotube wires is one of an S direction and a Z direction, and a twist direction d2 of the carbon nanotube strand wire is another one of the S direction and the Z direction.

4. The carbon nanotube strand wire according to claim 1,
wherein the number of twists t1 of the carbon nanotube wires is greater than 0 and less than 500 T/m,
the number of twists t2 of the carbon nanotube strand wire is equal to or greater than 1000 T/m and less than 2500 T/m, and
a twist direction d1 of the carbon nanotube wires is one of an S direction and a Z direction, and a twist direction d2 of the carbon nanotube strand wire is another one of the S direction and the Z direction.

5. The carbon nanotube strand wire according to claim 2,
wherein the number of twists t1 of the carbon nanotube wires is equal to or greater than 0 and less than 1000 T/m, and
the number of twists t2 of the carbon nanotube strand wire is greater than 0 and less than 500 T/m.

6. The carbon nanotube strand wire according to claim 2,
wherein the number of twists t1 of the carbon nanotube wires is equal to or greater than 0 and less than 500 T/m, and
the number of twists t2 of the carbon nanotube strand wire is equal to or greater than 500 T/m and less than 1000 T/m.

7. The carbon nanotube strand wire according to claim 2,
wherein the number of twists t1 of the carbon nanotube wires is equal to or greater than 500 T/m and less than 1000 T/m,
the number of twists t2 of the carbon nanotube strand wire is equal to or greater than 500 T/m and less than 1000 T/m, and
a twist direction d1 of the carbon nanotube wires is one of an S direction and a Z direction, and a twist direction d2 of the carbon nanotube strand wire is another one of the S direction and the Z direction.

8. The carbon nanotube strand wire according to claim 5,
wherein the number of twists t1 of the carbon nanotube wires is equal to or greater than 0 and less than 500 T/m, and
the number of twists t2 of the carbon nanotube strand wire is greater than 0 and less than 500 T/m.

9. The carbon nanotube strand wire according to claim 2,
wherein the number of twists t1 of the carbon nanotube wires is equal to or greater than 500 T/m and less than 1000 T/m,
the number of twists t2 of the carbon nanotube strand wire is greater than 0 and less than 1000 T/m, and
a twist direction d1 of the carbon nanotube wires is one of an S direction and a Z direction, and a twist direction d2 of the carbon nanotube strand wire is another one of the S direction and the Z direction.

10. The carbon nanotube strand wire according to claim 6,
wherein the number of twists t1 of the carbon nanotube wires is greater than 0 and less than 500 T/m,
the number of twists t2 of the carbon nanotube strand wire is equal to or greater than 500 T/m and less than 1000 T/m, and
a twist direction d1 of the carbon nanotube wires is one of an S direction and a Z direction, and a twist direction d2 of the carbon nanotube strand wire is another one of the S direction and the Z direction.

11. The carbon nanotube strand wire according to any one of claims 1 to 10,
wherein an equivalent circle diameter of the carbon nanotube wires is equal to or greater than 0.01 mm and equal to or less than 30 mm, and an equivalent circle diameter of the carbon nanotube strand wire is equal to or greater than 0.1 mm and equal to or less than 60 mm.

12. A coated carbon nanotube electric wire comprising:
the carbon nanotube strand wire according to any one of claims 1 to 11; and
an insulating coating layer provided at a periphery of the carbon nanotube strand wire.

13. A wire harness comprising
the coated carbon nanotube electric wire according to claim 12.

14. A wiring for a robot comprising
the coated carbon nanotube electric wire according to claim 12.

15. An overhead wiring for a train comprising
the coated carbon nanotube electric wire according to claim 12.

## Patentansprüche

1. Kohlenstoff-Nanoröhren-Litzendraht, bei dem mehrere Kohlenstoff-Nanoröhren-Drähte mehrerer gebündelter Kohlenstoff-Nanoröhren-Aggregate, die aus mehreren Kohlenstoff-Nanoröhren aufgebaut sind, miteinander verdrillt sind,
wobei eine Anzahl von Verdrillungen t1 der Kohlenstoff-Nanoröhren-Drähte gleich oder größer als 0 und kleiner als 2500 T/m ist, und
eine Anzahl von Verdrillungen t2 des Kohlenstoff-Nanoröhren-Litzendrahtes größer als 0 und kleiner als 2500 T/m ist.

2. Kohlenstoff-Nanoröhren-Litzendraht nach Anspruch 1,
wobei die Anzahl der Verdrillungen t1 der Kohlenstoff-Nanoröhren-Drähte gleich oder größer als 0 und kleiner als 1000 T/m ist, und
die Anzahl der Verdrillungen t2 des Kohlenstoff-Nanoröhren-Litzendrahtes größer als 0 und kleiner als 1000 T/m ist.

3. Kohlenstoff-Nanoröhren-Litzendraht nach Anspruch 1,
wobei die Anzahl der Verdrillungen t1 der Kohlenstoff-Nanoröhren-Drähte gleich oder größer als 1000 T/m und kleiner als 2500 T/m ist,
die Anzahl der Verdrillungen t2 des Kohlenstoff-Nanoröhren-Litzendrahtes größer als 0 und kleiner als 500 T/m ist, und
eine Verdrillungsrichtung d1 der Kohlenstoff-Nanoröhren-Drähte eine von einer S-Richtung und einer Z-Richtung ist, und eine Verdrillungsrichtung d2 des Kohlenstoff-Nanoröhren-Litzendrahtes eine andere von der S-Richtung und der Z-Richtung ist.

4. Kohlenstoff-Nanoröhren-Litzendraht nach Anspruch 1,
wobei die Anzahl der Verdrillungen t1 der Kohlenstoff-Nanoröhren-Drähte größer als 0 und kleiner als 500 T/m ist,
die Anzahl der Verdrillungen t2 des Kohlenstoff-Nanoröhren-Litzendrahtes gleich oder größer als 1000 T/m und kleiner als 2500 T/m ist, und
eine Verdrillungsrichtung d1 der Kohlenstoff-Nanoröhren-Drähte eine von einer S-Richtung und einer Z-Richtung ist, und eine Verdrillungsrichtung d2 des Kohlenstoff-Nanoröhren-Litzendrahtes eine andere von der S-Richtung und der Z-Richtung ist.

5. Kohlenstoff-Nanoröhren-Litzendraht nach Anspruch 2,
wobei die Anzahl der Verdrillungen t1 der Kohlenstoff-Nanoröhren-Drähte gleich oder größer als 0 und kleiner als 1000 T/m ist, und
die Anzahl der Verdrillungen t2 des Kohlenstoff-Nanoröhren-Litzendrahtes größer als 0 und kleiner als 500 T/m ist.

6. Kohlenstoff-Nanoröhren-Litzendraht nach Anspruch 2,
wobei die Anzahl der Verdrillungen t1 der Kohlenstoff-Nanoröhren-Drähte gleich oder größer als 0 und kleiner als 500 T/m ist, und
die Anzahl der Verdrillungen t2 des Kohlenstoff-Nanoröhren-Litzendrahtes gleich oder größer als 500 T/m und kleiner als 1000 T/m ist.

7. Kohlenstoff-Nanoröhren-Litzendraht nach Anspruch 2,
wobei die Anzahl der Verdrillungen t1 der Kohlenstoff-Nanoröhren-Drähte gleich oder größer als 500 T/m und kleiner als 1000 T/m ist,
die Anzahl der Verdrillungen t2 des Kohlenstoff-Nanoröhren-Litzendrahtes gleich oder größer als 500 T/m und kleiner als 1000 T/m ist, und
eine Verdrillungsrichtung d1 der Kohlenstoff-Nanoröhren-Drähte eine von einer S-Richtung und einer Z-Richtung ist, und eine Verdrillungsrichtung d2 des Kohlenstoff-Nanoröhren-Litzendrahtes eine andere von der S-Richtung und der Z-Richtung ist.

8. Kohlenstoff-Nanoröhren-Litzendraht nach Anspruch 5,
wobei die Anzahl der Verdrillungen t1 der Kohlenstoff-Nanoröhren-Drähte gleich oder größer als 0 und kleiner als 500 T/m ist, und
die Anzahl der Verdrillungen t2 des Kohlenstoff-Nanoröhren-Litzendrahtes größer als 0 und kleiner als 500 T/m ist.

9. Kohlenstoff-Nanoröhren-Litzendraht nach Anspruch 2,
wobei die Anzahl der Verdrillungen t1 der Kohlenstoff-Nanoröhren-Drähte gleich oder größer als 500 T/m und kleiner als 1000 T/m ist,
die Anzahl der Verdrillungen t2 des Kohlenstoff-Nanoröhren-Litzendrahtes größer als 0 und kleiner als 1000 T/m ist, und
eine Verdrillungsrichtung d1 der Kohlenstoff-Nanoröhren-Drähte eine von einer S-Richtung und einer Z-Richtung ist, und eine Verdrillungsrichtung d2 des Kohlenstoff-Nanoröhren-Litzendrahts eine andere von der S-Richtung und der Z-Richtung ist.

10. Kohlenstoff-Nanoröhren-Litzendraht nach Anspruch 6,
wobei die Anzahl der Verdrillungen t1 der Kohlenstoff-Nanoröhren-Drähte größer als 0 und kleiner als 500 T/m ist,
die Anzahl der Verdrillungen t2 des Kohlenstoff-Nanoröhren-Litzendrahtes gleich oder größer als 500 T/m und kleiner als 1000 T/m ist, und
eine Verdrillungsrichtung d1 der Kohlenstoff-Nanoröhren-Drähte eine von einer S-Richtung und einer Z-Richtung ist, und eine Verdrillungsrichtung d2 des Kohlenstoff-Nanoröhren-Litzendrahts eine andere von der S-Richtung und der Z-Richtung ist.

11. Kohlenstoff-Nanoröhren-Litzendraht nach einem der Ansprüche 1 bis 10,
wobei ein äquivalenter Kreisdurchmesser der Kohlenstoff-Nanoröhren-Drähte gleich oder größer als 0,01 mm und gleich oder kleiner als 30 mm ist und ein äquivalenter Kreisdurchmesser des Kohlenstoff-Nanoröhren-Litzendrahtes gleich oder größer als 0,1 mm und gleich oder kleiner als 60 mm ist.

12. Beschichteter elektrischer Draht aus Kohlenstoff-Nanoröhren, der umfasst:
den Kohlenstoff-Nanoröhren-Litzendraht nach einem der Ansprüche 1 bis 11; und
eine isolierende Überzugsschicht, die an der Peripherie des Kohlenstoff-Nanoröhren-Litzendrahtes vorgesehen ist.

13. Kabelbaum, umfassend
der beschichtete elektrische Draht aus Kohlenstoff-Nanoröhren nach Anspruch 12.

14. Eine Verdrahtung für einen Roboter besteht aus
den beschichteten elektrischen Draht aus Kohlenstoff-Nanoröhren nach Anspruch 12.

15. Oberleitung für einen Zug, umfassend
den beschichteten elektrischen Draht aus Kohlenstoff-Nanoröhren nach Anspruch 12.

## Revendications

1. Fil pour torons en nanotubes de carbone dans lequel une pluralité de fils en nanotubes de carbone d'une pluralité de groupes de nanotubes de carbone en faisceau conçus sous la forme d'une pluralité de nanotubes de carbone sont torsadés ensemble,
dans lequel le nombre de torsades t1 des fils en nanotubes en carbone est supérieur ou égal à 0 et inférieur à 2 500 T/m ; et
le nombre de torsades t2 du fil pour toron en nanotubes de carbone est supérieur ou égal à 0 et inférieur à 2 500 T/m ; et

2. Fil pour torons en nanotubes de carbone selon la revendication 1,
dans lequel le nombre de torsades t1 des fils en nanotubes de carbone est supérieur ou égal à 0 et inférieur à 1 000 T/m ; et
le nombre de torsades t2 du fil pour torons en nanotubes de carbone est supérieur ou égal à 0 et inférieur à 1 000 T/m.

3. Fil pour torons en nanotubes de carbone selon la revendication 1,
dans lequel le nombre de torsades t1 des fils en nanotubes de carbone est supérieur ou égal à 1 000 et inférieur à 2 500 T/m,
le nombre de torsades t2 du nombre de torsades t2 du fil pour torons en nanotubes de carbone est supérieur à 0 et inférieur à 500 T/m, et
le sens de torsade dl des fils en nanotubes de carbone est l'un parmi un sens S et un sens Z, et un sens de torsade d2 du fil pour torons en nanotube de carbone est l'un parmi le sens S et un sens Z.

4. Fil pour torons en nanotubes de carbone selon la revendication 1,
dans lequel le nombre de torsades t1 des fils en nanotubes de carbone est supérieur ou égal à 0 et inférieur à 500 T/m,
dans lequel le nombre de torsades t2 du fil en nanotubes de carbone est supérieur ou égal à 1 000 et inférieur à 2 500 T/m,
le sens de torsade d1 des fils en nanotubes de carbone est l'un parmi un sens S et un sens Z, et un sens de torsade d2 du fil pour torons en nanotube de carbone est l'un parmi le sens S et un sens Z.

5. Fil pour torons en nanotubes de carbone selon la revendication 2,
dans lequel le nombre de torsades t1 des fils en nanotubes de carbone est supérieur ou égal à 0 et inférieur à 1 000 T/m ; et
le nombre de torsades t2 du fil pour torons en nanotubes de carbone est supérieur ou égal à 0 et inférieur à 500 T/m.

6. Fil pour torons en nanotubes de carbone selon la revendication 2,
dans lequel le nombre de torsades t1 des fils en nanotubes de carbone est supérieur ou égal à 0 et inférieur à 500 T/m ; et
dans lequel le nombre de torsades t2 du fil en nanotubes de carbone est supérieur ou égal à 500 et inférieur à 1 000 T/m.

7. Fil pour torons en nanotubes de carbone selon la revendication 2,
dans lequel le nombre de torsades t1 des fils en nanotubes de carbone est supérieur ou égal à 500 et inférieur à 1 000 T/m,
dans lequel le nombre de torsades t2 du fil en nanotubes de carbone est supérieur ou égal à 500 et inférieur à 1 000 T/m, et
le sens de torsade d1 des fils en nanotubes de carbone est l'un parmi un sens S et un sens Z, et un sens de torsade d2 du fil pour torons en nanotube de carbone est l'un parmi le sens S et un sens Z.

8. Fil pour torons en nanotubes de carbone selon la revendication 5,
dans lequel le nombre de torsades t1 des fils en nanotubes de carbone est supérieur ou égal à 0 et inférieur à 500 T/m ; et
le nombre de torsades t2 du fil pour torons en nanotubes de carbone est supérieur ou égal à 0 et inférieur à 500 T/m.

9. Fil pour torons en nanotubes de carbone selon la revendication 2,
dans lequel le nombre de torsades t1 des fils en nanotubes de carbone est supérieur ou égal à 500 et inférieur à 1 000 T/m,
le nombre de torsades t2 du fil pour torons en nanotubes de carbone est supérieur ou égal à 0 et inférieur à 1 000 T/m, et
le sens de torsade d1 des fils en nanotubes de carbone est l'un parmi un sens S et un sens Z, et un sens de torsade d2 du fil pour torons en nanotube de carbone est l'un parmi le sens S et un sens Z.

10. Fil pour torons en nanotubes de carbone selon la revendication 6,
dans lequel le nombre de torsades t1 des fils en nanotubes de carbone est supérieur ou égal à 0 et inférieur à 500 T/m,
dans lequel le nombre de torsades t2 du fil en nanotubes de carbone est supérieur ou égal à 500 et inférieur à 1 000 T/m,
le sens de torsade d1 des fils en nanotubes de carbone est l'un parmi un sens S et un sens Z, et un sens de torsade d2 du fil pour torons en nanotube de carbone est l'un parmi le sens S et un sens Z.

11. Fil pour torons en nanotubes de carbone selon l'une quelconque des revendications 1 à 10,
dans lequel un diamètre équivalent circulaire des fils en nanotubes de carbone est supérieur ou égal à 0,01 mm et inférieur ou égal à 30 mm, et un diamètre de cercle équivalent du fil pour torons en nanotubes de carbone est supérieur ou égal à 0,1 mm et inférieur ou égal à 60 mm.

12. Fil électrique en nanotubes de carbone comprenant :
le fil pour torons en nanotubes de carbone selon l'une quelconque des revendications 1 à 11 ; et
une couche de revêtement isolant disposée à la périphérie du fil pour torons en nanotubes de carbone.

13. Faisceau de fil comprenant
le fil électrique en nanotubes de carbone revêtu selon la revendication 12.

14. Câblage pour un robot comprenant
le fil électrique en nanotubes de carbone revêtu selon la revendication 12.

15. Ligne aérienne pour un train comprenant
le fil électrique en nanotubes de carbone revêtu selon la revendication 12.
